## Europäisches Patentamt

## European Patent Office

## Office européen des brevets

(11) Veröffentlichungsnummer: **0 152 100**
**A2**

(12) # EUROPÄISCHE PATENTANMELDUNG

(21) Anmeldenummer: 85101497.7

(22) Anmeldetag: 12.02.85

(51) Int. Cl.⁴: **A 01 C 7/04**

(30) Priorität: 13.02.84 DE 3405031
28.02.84 DE 3407110

(43) Veröffentlichungstag der Anmeldung:
21.08.85 Patentblatt 85/34

(84) Benannte Vertragsstaaten:
AT BE CH DE FR GB IT LI LU NL SE

(71) Anmelder: Amazonen-Werke H. Dreyer GmbH & Co. KG

D-4507 Hasbergen-Gaste(DE)

(72) Erfinder: Scheufler, Bernd, Dr.
Am Amazonenwerk 101
D-4507 Hasbergen(DE)

(72) Erfinder: Kemper, Martin
An der Gänsekuhle 7
D-4709 Bergkamen(DE)

(74) Vertreter: Patentanwälte Grünecker, Dr. Kinkeldey, Dr.
Stockmair, Dr. Schumann, Jakob, Dr. Bezold, Meister,
Hilgers, Dr. Meyer-Plath
Maximilianstrasse 58
D-8000 München 22(DE)

(54) Pneumatische Einzelkornsämaschine.

(57) Die Erfindung betrifft eine pneumatische Einzelkornsämaschine mit einem Saatgutbehälter und einer Saugkammer, die voneinander durch ein umlaufendes scheibenförmiges Vereinzelungsorgan getrennt sind, welches mit Vorsprüngen, die in Umfangsrichtung des Vereinzelungsorgans mit gegenseitigen Abständen angeordnet sind, durch den im Saatgutbehälter vorhandenen Saatgutvorrat geführt ist, wobei jeder Vorsprung im Bereich der von der Saugkammer entfernten Mündung jeweils eines durch das Vereinzelungsorgan hindurch verlaufenden und mit der Saugkammer in Verbindung stehenden Loches angeordnet ist, wobei ferner die Saugkammer sich längs eines Teils der Bahn der Löcher erstreckt und der Unterdruck an einer Stelle der Bahn unterbrochen ist. Es ist Aufgabe der Erfindung, eine vereinfachte Einzelkornsämaschine der eingangs erwähnten Art zur verbesserten Vereinzelung von Saatkörnern zu schaffen.

Dies wird dadurch erreicht, daß jeder Vorsprung auf der in Drehrichtung des Vereinzelungsorgans vorlaufend angeordneten Seite des jeweiligen Loches angeordnet ist, so daß er das jeweilge Loch zumindest teilweise abschirmt.

FIG. 1

Pneumatische Einzelkornsämaschine

B e s c h r e i b u n g

Die Erfindung betrifft eine pneumatische Einzelkornsämaschine gemäß dem Oberbegriff des Patentanspruches 1.

Eine derartige Einzelkornsämaschine ist bereits durch die
FR-PS 21 35 702 bekannt geworden. Die Vereinzelungsscheibe
dieser bekannten Maschine weist in ihrem Randbereich mit
gleichmäßigen Umfangsabständen angeordnete schaufelartige
Vorsprünge auf. Im Zwischenraum zwischen jeweils zwei benachbarten schaufelartigen Vorsprüngen sind in Umfangsrichtung etwa mittig Lochgruppen bestehend aus zwei, auf
verschiedenen Lochkreisen angeordneten und mit Saugluft zu
beaufschlagenden Löchern ausgebildet. Bei Drehung der Vereinzelungsscheibe nehmen die schaufelartigen Vorsprünge
jeweils mehrere Saatkörner mit, die sich in den Zwischenräumen an den mit Saugluft beaufschlagten Löchern des
äußeren Lochkreises festsetzen. Die Löcher des inneren
Lochkreises sind zu diesem Zeitpunkt nicht mit Saugluft
beaufschlagt. Eine am Gehäuse verstellbar angeordnete,über
die Löcher des äußeren Lochkreises radial nach innen überstehende
Abdrängplatte ist vorgesehen, um die an den Löchern des äußeren Lochkreises angesaugten Saatkörner derart in Richtung auf die
nun ebenfalls mit Saugluft beaufschlagten Löcher des inneren
Lochkreises abzudrängen,daß sich dort nur eines der Saatkörner festsetzt und die verbleibenden Saatkörner aufgrund der Schwerkraft in den Saatgutvorratsraum zurückfallen.

Diese bekannte Einzelkornsämaschine ist von verhältnismäßig aufwendiger Konstruktion, weist relativ große Abmessungen auf und ist in der Praxis nicht nur umständlich
zu bedienen,sondern auch bezüglich der Vereinzelung nicht
ausreichend funktionssicher. Die auf zwei Lochkreisen angeordneten Löcher, die Abdrängplatte und die sowohl in radialer als auch in axialer Richtung relativ großen schaufelartigen Vorsprünge führen zu entsprechend großen Abmessungen der Vorrichtung. Die in jedem Zwischenraum zwischen den schaufelartigen Vorsprüngen paarig angeordneten Löcher müssen nicht nur auf das zu vereinzelnde Saatgut, sondern auch zueinander bezüglich Form, Größe, Abstand und Anordnung genau abgestimmt sein, um eine Vereinzelung zu erzielen. Die Löcher weisen einen relativ großen Durchmesser auf, so daß dementsprechend und entsprechend der größeren Anzahl der anfänglich angesaugten Saatkörner ein relativ hoher Unterdruck mit entsprechend großem konstruktiven Aufwand erforderlich ist. Eine weitere Erhöhung des konstruktiven Aufwandes ergibt sich aus der Verwendung der verstellbaren Abdrängplatte. Bei jedem Wechsel des Saatgutes muß diese Abdrängplatte genau auf den erforderlichen Abstand zwischen die Löcher beider Lochkreise eingestellt werden. Trotzdem gewährleistet diese bekannte Einzelkornsämaschine in der Praxis nicht, daß immer nur ein Saatkorn abgegeben wird. Im Verhältnis zu den Durchmessern der Löcher besonders große und in ihrer Form kompakte Saatkörner werden oftmals nur in ungenügender Weise an den Löchern des inneren Lochkreises festgehalten, so daß der Vereinzelungsvorgang entsprechend unterbrochen ist. Mehrfachabgabe von Saatkörnern hingegen ist dann in verstärktem Maße festzustellen, wenn die Saatkörner im Verhältnis zum Durchmesser der Löcher besonders klein und in ihrer Form wenig kompakt sind. Derartige Saatkörner werden oftmals in Gruppen von zwei oder mehr an den Löchern des inneren Lochkreises festgehalten und dann abgegeben.

Es ist Aufgabe der Erfindung, eine vereinfachte Einzelkornsämaschine der eingangs erwähnten Art zur verbesserten Vereinzelung von Saatkörnern zu schaffen.

Diese Aufgabe wird erfindungsgemäß durch die kennzeichnenden Merkmale des Patentanspruchs 1 gelöst.

Mit diesen Maßnahmen ist von vornherein sichergestellt, daß in Umfangsrichtung des Vereinzelungsorgans sich lediglich ein Saatkorn am jeweiligen Loch festsetzt, und zwar dieses vollständig abdeckend. Infolgedessen können die Löcher in Umfangsrichtung des Vereinzelungsorgans mit geringen Abmessungen ausgebildet sein, wodurch wiederum der Doppelbewegung der Löcher entgegengearbeitet wird. Durch entsprechend geringe Abmessungen der Löcher in radialer Richtung wird auch eine Doppelbelegung in dieser Richtung verhindert. Die erfindungsgemäße Einzelkornsämaschine weist insgesamt hinsichtlich der Vereinzelung von Saatkörnern eine gleichmäßigere und sichere Funktion als die im Stand der Technik bekannten Vorrichtungen auf.

Die geringen Abmessungen der Löcher erfordern auch geringeren Unterdruck und damit einen verringerten Konstruktionsaufwand. Dazu sowie zur vereinfachten Handhabung trägt bei, daß keine verstellbare Abdrängplatte oder andere aus dem Stand der Technik bekannte Abstreifer erforderlich sind. Die paarige Anordnung der Löcher pro Vorsprung entfällt. Die Vorsprünge sind nicht mehr schaufelförmig, sondern mit relativ geringen Abmessungen in radialer und in axialer Richtung ausgebildet, um von vornherein zu vermeiden, daß mit jedem Vorsprung mehrere Saatkörner aufgenommen werden. Gleichzeitig ergibt sich daraus eine kompakte Bauweise sowohl in axialer als auch in radialer Richtung. Insbesondere die geringe Breite des erfindungsgemäßen Vereinzelungsorgans ist bei der Verwendung für die Getreideaussaat mit sehr engen Reihenabständen von großer Bedeutung.

Erfindungsgemäß können die Vorsprünge und die der Saugkammer abgewandten Mündungen der Löcher auf der Mantelfläche oder auf einer Seitenfläche des scheibenförmigen Vereinzelungsorgans angeordnet sein. Bei der ersteren Anordnung wird eine besonders exakte Abgabe der vereinzelten Saatkörner erreicht, da diese nach dem Unterbrechen des die Löcher beaufschlagenden Saugluftstromes ungehindert nach unten in die Saatfurche fallen können. Weiterhin werden die Saatkörner aufgrund der durch die Drehung des Vereinzelungsorgans entstehenden Fliehkraft ohne Behinderung in die Saatfurche geschleudert. Außerdem weist das Vereinzelungsorgan besonders geringe Abmessungen in Axialrichtung auf. Bei der letzteren Anordnung ist das Vereinzelungsorgan von besonders geringem Durchmesser und erfordert bei sehr guter Vereinzelung ebenfalls keine verstellbare Abdrängplatte oder verstellbare Abstreifer.

Um die Gefahr der Mitnahme mehrerer Saatkörner beim Durchlauf durch den Saatgutvorratsraum weiter zu verringern, entsprechen die Abmessungen der Vorsprünge in Umfangsrichtung des Vereinzelungsorgans vorzugsweise wenigstens dem halben Abstand zwischen jeweils zwei benachbarten Löchern. In dieser Hinsicht günstig ist auch eine Anordnung der Vorsprünge derart, daß sie unmittelbar an das zugeordnete Loch angrenzen.

Eine in dieser Hinsicht vorteilhafte Weiterbildung der Erfindung besteht darin, daß die Vorsprünge auf der in Drehrichtung des Vereinzelungsorgans vorlaufend angeordneten Seite in Drehrichtung gesehen schräg in Richtung zur Mantelfläche bzw. Ebene des Vereinzelungsorgans abfallend und auf der in Drehrichtung des Vereinzelungsorgans nachlaufend angeordneten Seite steil in Richtung zur Mantelfläche bzw. Ebene des Vereinzelungsorgans abfallend ausgebildet sind. Die Vorsprünge weisen somit keine schaufelradähnliche Wirkung auf. In dieser Hinsicht weiter günstig ist eine Ausbildung derart, daß die Vorsprünge auf ihrer in Drehrichtung des Vereinzelungsorgans vorlaufend angeordneten Seite in die Mantelfläche bzw. Scheibenseitenfläche zumindest annähernd auslaufen. Eine hinsichtlich der Vermeidung der schaufelradähnlichen Wirkung der Vorsprünge vorteilhafte Weiterbildung der Erfindung besteht darin, daß die der Vereinzelungsorganachse zugewandten, radial inneren Seitenflächen der Vorsprünge zumindest annähernd von der steilen Hinterkante tangential schräg nach außen in Richtung zu der in Drehrichtung vorlaufend angeordneten Kante verlaufen.

Die Vereinzelung der Saatkörner wird vorteilhafterweise dadurch unterstützt, daß die Vorsprünge auf ihrer in Drehrichtung des Vereinzelungsorgans nachlaufend angeordneten Seite zumindest annähernd radial verlaufend ausgebildet sind. Dies trifft sowohl auf die auf der Mantelfläche als auch auf der Scheibenseitenfläche des Vereinzelungsorgans angeordneten Vorsprünge zu. Weiterhin vorteilhaft in dieser Hinsicht ist die Ausbildung derart, daß die Vorsprünge auf ihrer in Drehrichtung des Vereinzelungsorgans nachlaufend angeordneten Seite im wesentlichen normal zur Scheibenebene des Vereinzelungsorgans verlaufen. Vorzugsweise verlaufen die Vorsprünge auf ihrer der Vereinzelungsorganachse abgewandten, radial äußeren Seite zumindest annähernd kreisbogenförmig.

Eine besonders vorteilhafte Anlagerung der Saatkörner an die Löcher kann dadurch erreicht werden, daß die Löcher radial nach außen über die Vorsprünge hinausragen. In diesem Zusammenhang sind die Löcher vorzugsweise als sich in radialer Richtung erstreckende Langlöcher, vorteilhafterweise von elliptischer Form, ausgebildet. Hierbei ist es besonders günstig, wenn etwa die Hälfte des Querschnitts jedes Loches innerhalb des Bereichs liegt, der von dem um die Vereinzelungsorganachse mit dem Radius des Abstandes zu den radial äußeren Flächen der Vorsprünge geschlagenen Kreis begrenzt ist.

Weiterhin sieht die Erfindung bei einer Einzelkornsämaschine mit einem auf der Saatgutbehälterseite im Bereich der Saugkammer an dem Gehäuse der Maschine angeordneten, an das Vereinzelungsorgan heranreichenden Abstreifelement vor, daß das Abstreifelement bis an die Vorsprünge zumindest annähernd heranreicht. Hierdurch werden evtl. zu viel an die Löcher angelagerten Saatkörner entfernt, so daß anschließend auch in den schwierigsten Fällen nur noch ein Saatkorn pro Loch vorhanden ist. Vorzugsweise reicht das Abstreifelement zumindest annähernd an die der Vereinzelungsorganachse abgewandten, radial äußeren Seiten der Vorsprünge heran. Insbesondere bei Anordnung der Mündungen der Löcher sowie der Vorsprünge auf der Scheibenseitenfläche ergibt sich bei guter Abstreifwirkung keine Behinderung des Zurückfallens der abgestreiften Saatkörner in den Saatgutvorratsraum.

Um zu verhindern, daß Saatkörner zwischen dem Abstreifelement und den Vorsprüngen eingeklemmt bzw. beschädigt werden, ist es vorteilhaft, wenn die in Drehrichtung des Vereinzelungsorgans nachlaufend angeordnete Seite des Abstreifelements als abfallende Stufe ausgebildet ist, und daß die radial innere Kante der Stufe zumindest annähernd bis an die Vorsprünge heranreicht. Hierbei kann die axial äußere Stufenkante sowohl steil abfallend als auch in einem Bereich von 20 bis 40 Grad von der radialen Richtung abweichend verlaufen. Die radial innere und/oder die axial äußere Stufenkante kann eine kleine Abrundung aufweisen, so daß die evtl. zu viel anhaftenden Saatkörner weich abgestreift werden. Bei einigen Saatgutsorten hat diese Abrundung überraschend gute Ergebnisse gebracht. Eine besonders einfache Ausbildung des Abstreifelementes wird dadurch erreicht, daß es fest an dem Gehäuse angeordnet ist. Hierbei kann das Abstreifelement sowohl einstückig mit dem Gehäuse verbunden, als auch an ihm angeschraubt sein.

Gemäß einer Weiterbildung der Erfindung sind die Löcher nahe an der Außenkante des Vereinzelungsorgans angeordnet. Hierdurch wird ein störungsfreies Ablösen der Saatkörner von dem Vereinzelungsorgan nach dem Unterbrechen des Unterdrucks sowie ein störungsfreies Abfallen der Saatkörner von dem Vereinzelungsorgan in Richtung Saatfurche erreicht. Hierbei ist es dann sinnvoll, daß die Vorsprünge

0152100

ebenfalls nahe der Außenkante des Vereinzelungsorgans angeordnet sind.

In einer weiteren Ausgestaltung der Erfindung ist vorgesehen, daß auf der dem Saatgutbehälter zugewandten Seite des Vereinzelungsorgans ein stufenförmig abfallender Ringabsatz auf der der Vereinzelungsorganachse abgewandten Seite der Löcher ausgebildet ist. Dies ist eine zusätzliche Maßnahme, um sicherzustellen, daß lediglich Platz für die Anlagerung eines einzigen Saatkornes am jeweiligen Loch vorhanden ist. Gleichfalls wird dadurch ein störungsfreies Ablösen der Saatkörner nach dem Unterbrechen des Unterdrucks von dem Vereinzelungsorgan erreicht.

Das Anlagern von lediglich einem einzigen Saatkorn am jeweiligen Loch wird noch dadurch weiter verbessert, daß auf der dem Saatgutbehälter zugewandten Seite des Vereinzelungsorgans ein stufenförmig abfallender Ringabsatz auf der der Vereinzelungsorganachse zugewandten Seite der Löcher ausgebildet ist. Damit ergibt sich, daß in dem Bereich der Löcher der dem Saatgutbehälter zugewandten Seite des Vereinzelungsorgans ein in Form einer Erhebung ausgebildeter umlaufender Ring angebracht ist, und daß in der ebenen Fläche dieses Ringes die Löcher münden. Dieser Ring weist in radialer Richtung vorzugsweise eine größere Breite im Vergleich zum Durchmesser der Löcher auf. Die Vorsprünge sind vorteilhafterweise auf diesen Ring angeordnet.

Besonders günstig für die Vereinzelung der Saatkörner ist eine Ausbildung der Vorsprünge mit einer Breite, die etwa dem mittleren Durchmesser des jeweils auszubringenden Saatgutes entspricht. Die Breite des Ringes kann gleich oder größer als die der Vorsprünge sein.

In Weiterbildung der Erfindung ist vorgesehen, daß das Abstreifelement als Luftstrahl ausgebildet ist. Hierdurch wird in einfachster Weise eine sichere Vereinzelung der Saatkörner erreicht, wobei die evtl. zu viel an den mit Saugluft beaufschlagten Löchern angelagerten Saatkörner von dem Luftstrom weggeblasen werden. Vorteilhaft hierbei ist eine Ausrichtung des Luftstrahls derart, daß nur ein Saatkorn im Windschatten des Vorsprungs liegt, wenn sich dieser an dem Luftstrahl vorbeibewegt. Durch diese Maßnahme wird eine sehr sichere Vereinzelung der Saatkörner erreicht, wobei nur ein einziges Saatkorn geschützt in dem Bereich des Vorsprunges liegt.

Gemäß einer Weiterbildung der Erfindung ist vorgesehen, daß sich an das Abstreifelement in Drehrichtung des Vereinzelungsorgans entlang der Umlaufbahn der Vorsprünge ein Verlängerungsstück anschließt, daß ferner auf der dem Abstreifelement abgewandten Seite der Vorsprünge entlang der Umlaufbahn der Vorsprünge und gegenüberliegend dem Verlängerungsstück des Abstreifelementes ein Führungsstück angeordnet ist und daß das Verlängerungsstück und das Führungsstück zumindest bis zu der Stelle reichen, an der das vereinzelte Saatgut das Vereinzelungsorgan verläßt. Infolge dieser Maßnahmen werden die vereinzelten Saatkörner jeweils sicher bis zur Abgabestelle geführt, so daß nach dem Vereinzelungsvorgang keine Fehlstellen mehr entstehen können. Die vereinzelten Saatkörner werden innerhalb des von dem Vereinzelungsstück und dem Führungsstück gebildeten Kanals und den von den Vorsprüngen begrenzten Kammern sicher geführt.

Um zu verhindern, daß das jeweils vereinzelte Saatkorn nicht durch die Anfangskanten des von dem Verlängerungsstück und dem Führungsstück gebildeten Kanals weggestoßen wird, ist es vorteilhaft, den Anfang des Führungsstücks in Drehrichtung vorlaufend gegenüber der Stufe des Abstreifelementes mit einem Abstand anzuordnen, der zumindest dem Abstand zwischen zwei benachbarten Löchern bzw. Vorsprüngen entspricht.

Gemäß einer Weiterbildung der Erfindung ist der Unterdruck im Bereich des Verlängerungsstücks und des Führungsstücks unterbrochen. Hierdurch wird erreicht, daß sich evtl. in den Löchern festgeklemmte Saatkörner bereits vor Erreichen des Abgabepunktes aus den Löchern lösen. Dieses frühzeitige Lösen evtl. festgeklemmter Saatkörner wird besonders sicher gewährleistet, wenn der Unterdurck an einer Stelle unterbrochen ist, die in Drehrichtung des Vereinzelungsorgans mit einem erheblichen Abstand nachlaufend gegenüber den Enden des Verlängerungsstücks und des Führungsstücks angeordnet ist.

In einer bevorzugten Ausführung ist vorgesehen, daß der Unterdruck an einer Stelle unterbrochen ist, die in Drehrichtung des Vereinzelungsorgans zumindest in einem Abstand, der dem Abstand zwischen zwei benachbarten Vorsprüngen entspricht, vorlaufend gegenüber der Vorderkante des Führungsstücks angeordnet ist. Hierdurch wird erreicht, daß das vereinzelte Saatkorn in den Führungskanal eingezogen wird. Da der Saugluftstrom bereits frühzeitig unterbrochen wird, ist nur ein geringer Luftstrom erforderlich, so daß ein relativ kleines Gebläse bzw. eine geringe Gebläseleistung ausreicht. Hierdurch wird auch weiterhin die Geräuschentwicklung des Gebläses sehr niedrig gehalten. Weiterhin löst sich das Saatkorn frühzeitig aus dem Loch, und es wird von den Vorsprüngen innerhalb des Führungskanals bis zum Abgabepunkt geführt, wo es exakt abgegeben wird.

Weitere Einzelheiten der Erfindung sind in den übrigen Unteransprüchen und in der nachstehenden Beschreibung einiger Ausführungsbeispiele der Erfindung unter Bezugnahme auf die Zeichnung zu entnehmen.

In der Zeichnung zeigen:

Fig. 1    eine Einzelkornsämaschine in der Seitenansicht,

Fig. 2 den Vereinzelungsmechanismus der Einzelkornsämaschine in vergrößertem Maßstab in der Seitenansicht,

Fig. 3 das Gehäuse des Vereinzelungsmechanismus ohne
Deckel und ohne Vereinzelungsorgan in der Seitenansicht,

Fig. 4 den Vereinzelungsmechanismus im Schnitt entlang
der Linie IV-IV in Fig. 2,

Fig. 5 das Vereinzelungsorgan in der Seitenansicht,

Fig. 6 den Vereinzelungsmechanismus im Schnitt entlang der Linie VI-VI in Fig. 4, ·

Fig. 7 den Vereinzelungsmechanismus gemäß Fig. 6
im vergrößerten Maßstab in Teilansicht,

Fig. 8 einen Schnitt entlang der Linie VIII-VIII in
Fig. 7,

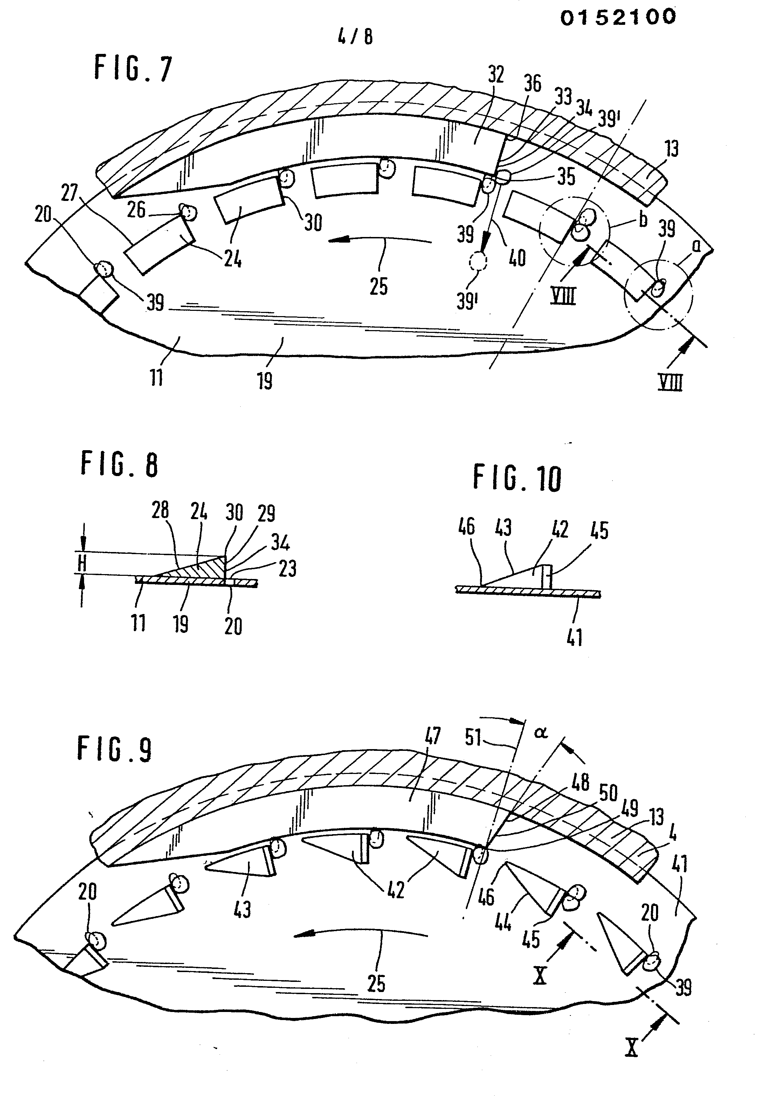

Fig. 9 einen weiteren Vereinzelungsmechanismus in
Teilansicht gemäß der Darstellungsweise in
Fig. 7,

Fig. 10 einen Schnitt entlang der Linie X-X in Fig. 9,

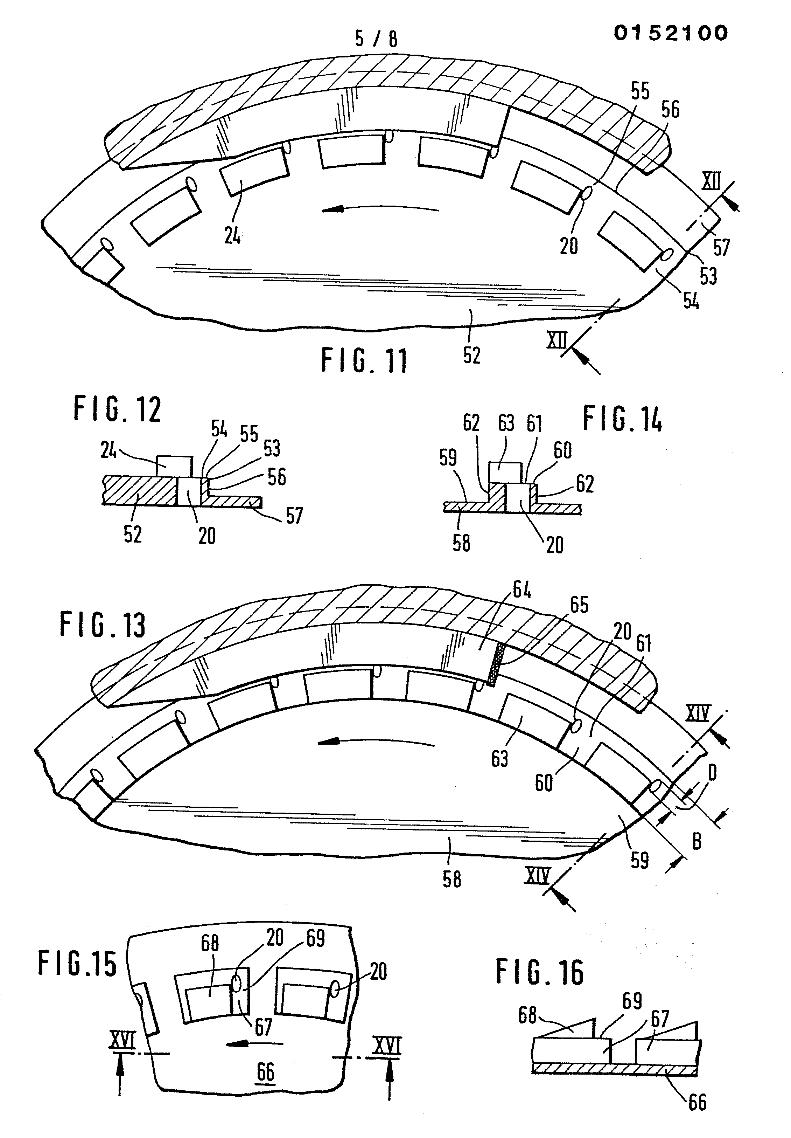

Fig. 11 einen anderen Vereinzelungsmechanismus in
Teilansicht gemäß der Darstellungsweise in
Fig. 7,

Fig. 12 einen Schnitt entlang der Linie XII-XII in
Fig. 11,

Fig. 13    einen nochmals anderen Vereinzelungsmechanismus in Teilansicht gemäß der Darstellungsweise
           in Fig. 7,

Fig. 14    einen Schnitt entlang der Linie XIV-XIV in Fig.
           13,der die Anordnung der Vorsprünge auf dem
           Vereinzelungsorgan zeigt,

Fig. 15    eine weitere Teildarstellung einer Anordnung
           von Vorsprüngen auf einem Vereinzelungsorgan
           in Seitenansicht,

Fig. 16    einen Schnitt entlang der Linie XVI-XVI in
           Fig. 15,

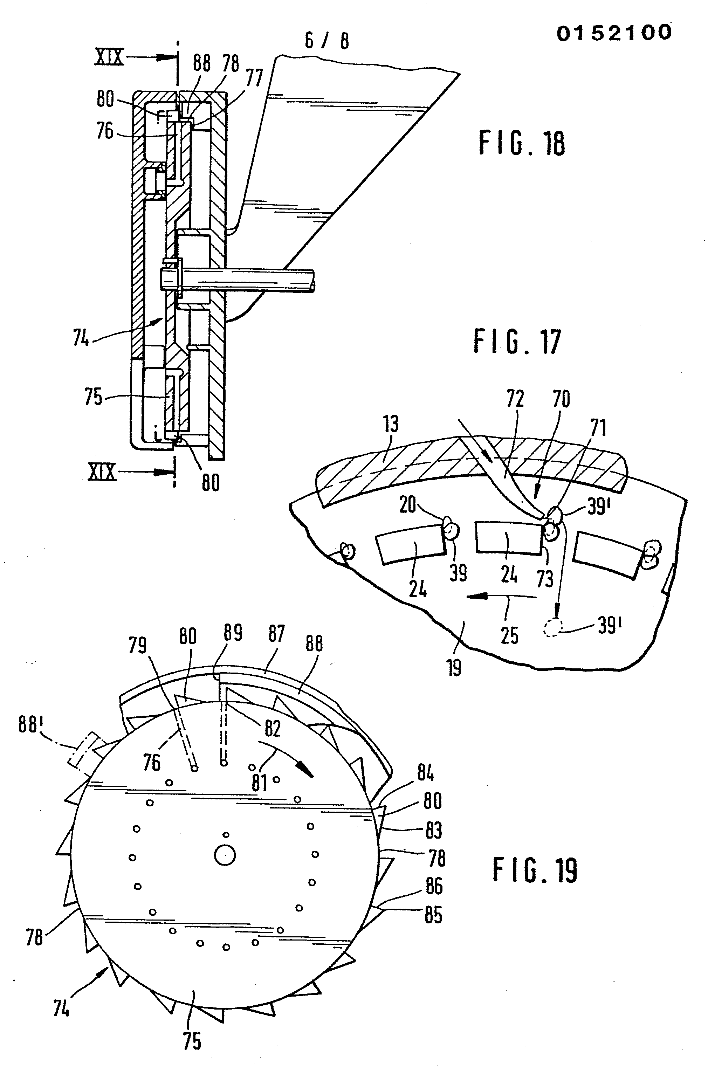

Fig. 17    einen weiteren Vereinzelungsmechanismus gemäß
           der Darstellungsweise in Fig. 7,

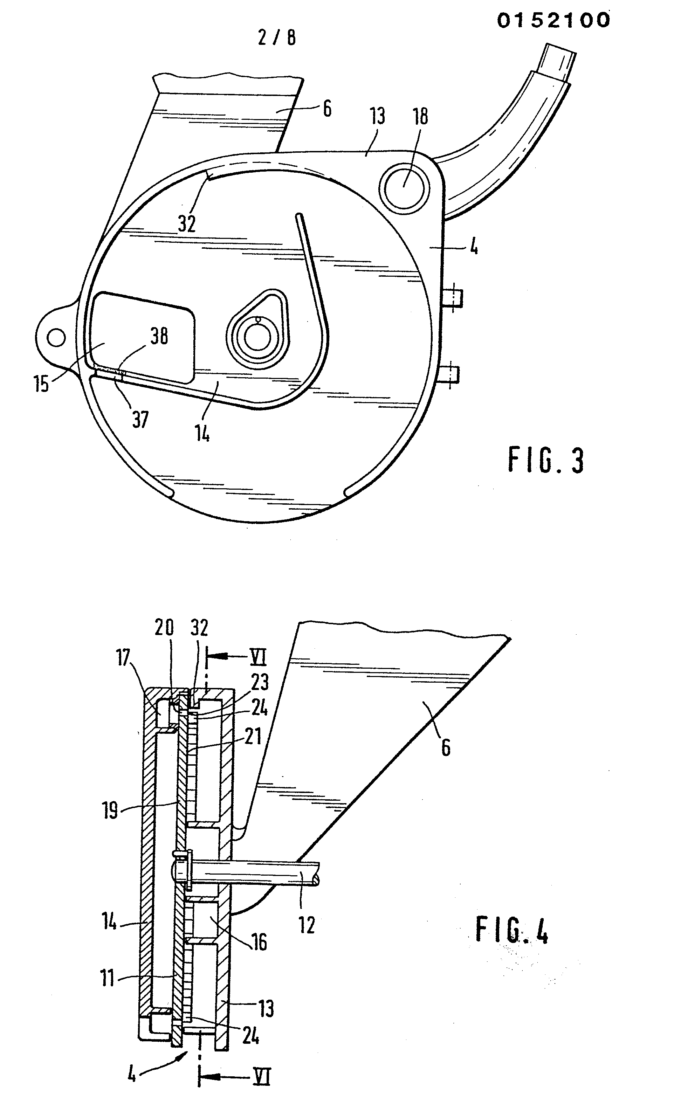

Fig. 18    einen weiteren Vereinzelungsmechanismus in
           der Darstellungsweise entsprechend Fig. 4,

Fig. 19    das Vereinzelungsorgan im Schnitt entlang der
           Linie XIX-XIX in Fig. 18,

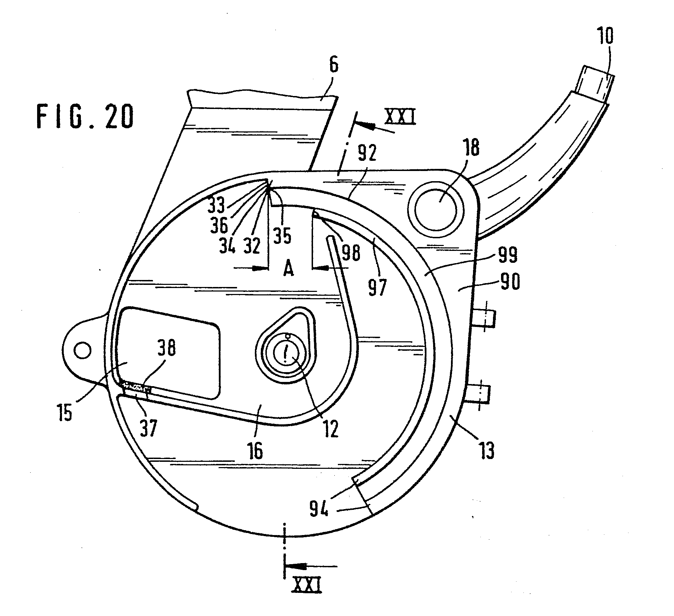

Fig. 20    das Gehäuse eines anderen Vereinzelungsmechanismus der Einzelkornsämaschine in vergrößertem Maßstab in der Seitenansicht,

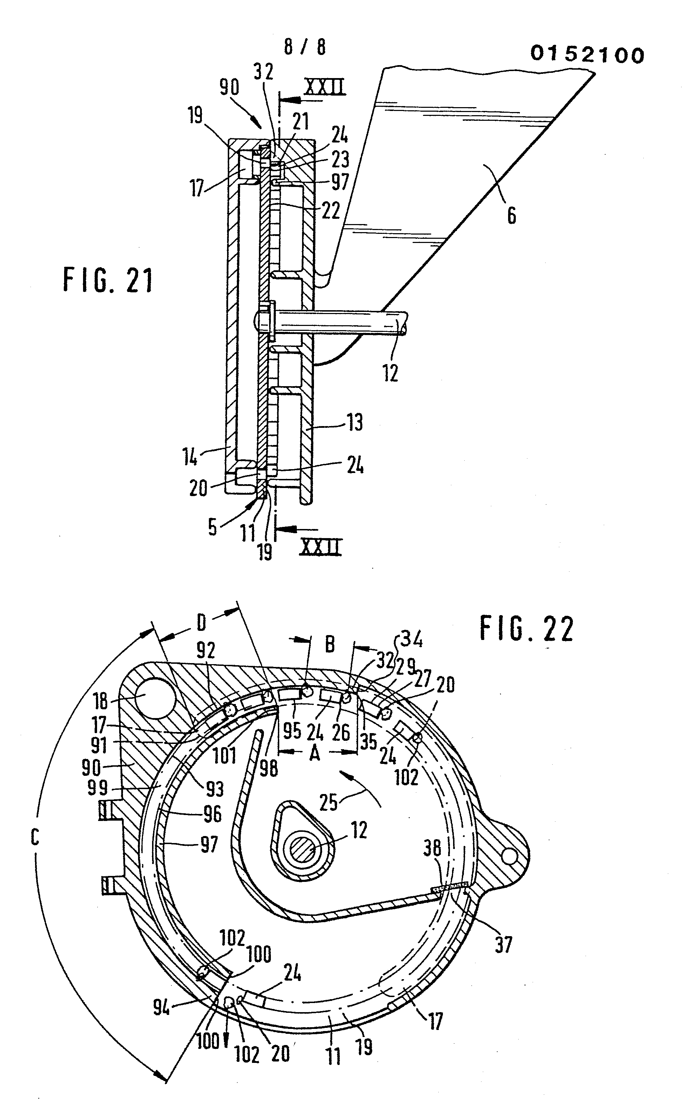

Fig. 21    den Vereinzelungsmechanismus im Schnitt entlang
           der Linie XXI-XXI in Fig. 20, und

Fig. 22    den Vereinzelungsmechanismus im Schnitt entlang
           der Linie XXII-XXII in Fig. 21.

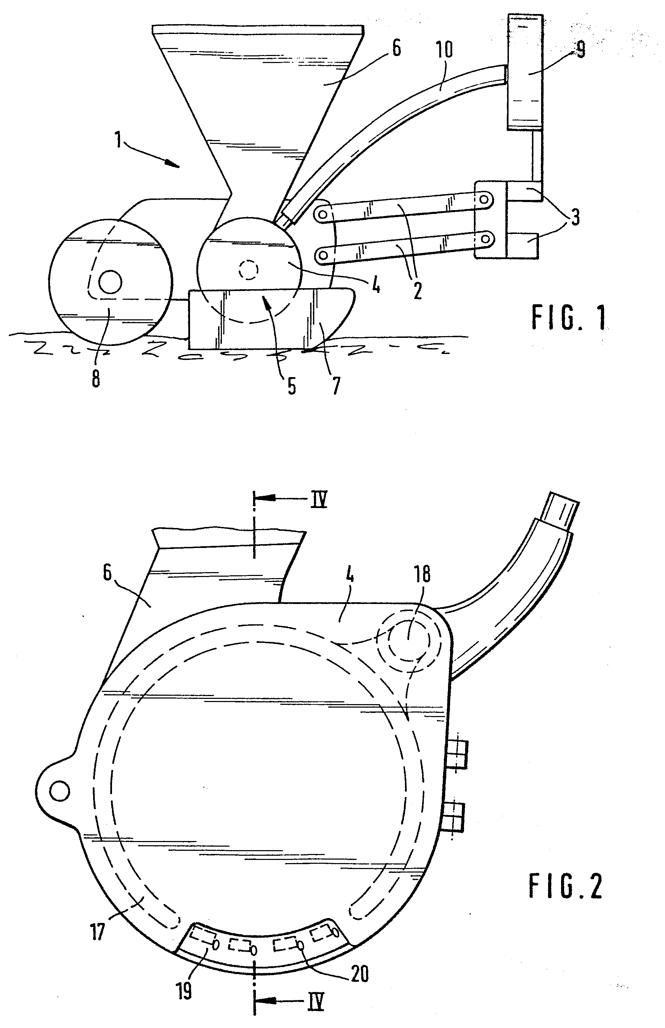

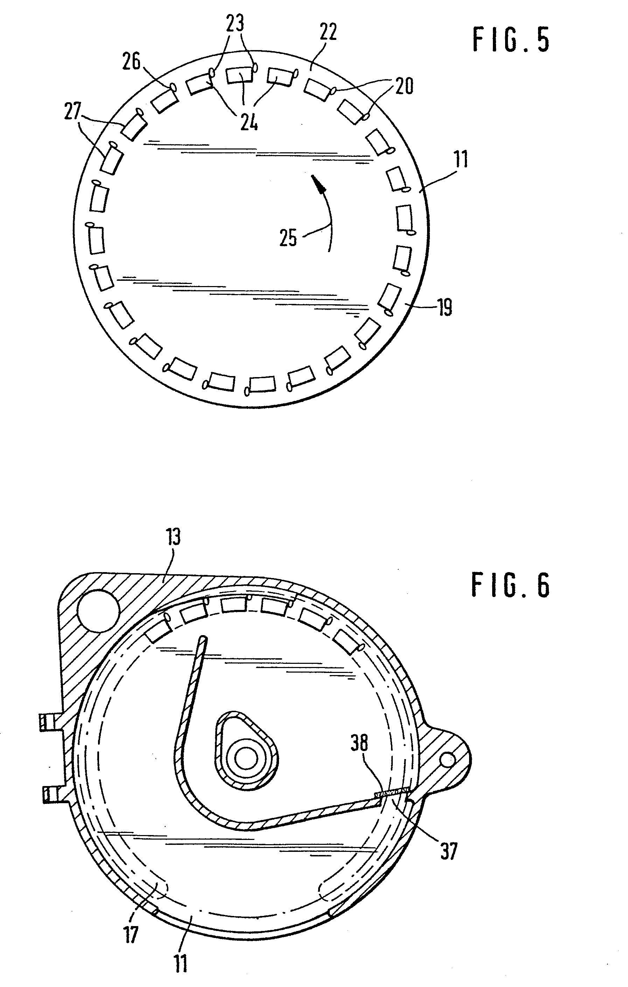

Die in den Fig. 1 bis 8 dargestellte Einzelkornsämaschine 1
ist mit weiteren Einzelkornsämaschinen über einzelne Parallelogrammlenker 2 an einem Zentralrahmen 3 angelenkt, der in bekannter und nicht dargestellter Weise an einem Schlepper angekuppelt ist. Die Einzelkornsämaschine weist ein in einem Gehäuse 4 angeordneten Vereinzelungsmechanismus 5 und ein an dem Gehäuse 4 angeflanschten Saatgutbehälter 6 sowie eine hinter einem Säschar 7 angeordnete Druckrolle 8 auf. Auf dem Zentralrahmen 3 ist ein von der Schlepperzapfwelle in bekannter Weise angetriebenes Gebläse 9 angeordnet, welches über an der Saugseite des Gebläses 9 angeschlossene Schläuche jeweils mit den einzelnen Einzelkornsämaschinen 1 verbunden ist.

In dem senkrecht stehenden Gehäuse 4 ist ein umlaufendes scheibenförmiges Vereinzelungsorgan 11 auf einer horizontalen Antriebswelle 12 angeordnet, die in bekannter Weise angetrieben ist.

Das Gehäuse 4 besteht aus einem der Einfachheit halber auch im folgenden als rückwärtig bezeichneten Teil 13 und einem Deckel 14. Der Teil 13 ist an dem Saatgutbehälter 6 angeflanscht. Der rückwärtige Teil 13 des Gehäuses 4 weist eine Öffnung 15 zum angeflanschten Saatgutbehälter 6 auf, so daß sich der im rückwärtigen Teil 13 des Gehäuses 4 befindliche Saatgutvorratsraum 16 mit dem Saatgutbehälter 6 eine Einheit bildet. Im Deckel 14 ist eine in der Form einer Saugniere ausgebildete Saugkammer 17 angeordnet, die über einen Kanal 18 und einen Schlauch 10 mit der Saugluftseite des Gebläses 9 verbunden ist.

Das Vereinzelungsorgan 11 ist als Scheibe 19 ausgebildet, die konzentrisch zu der von der Antriebswelle 12 gebildeten Vereinzelungsorganachse im gleichen Umfangsabstand zueinander angeordnete Löcher 20 aufweist. Die Saugkammer 17 erstreckt sich längs eines Teils der Lochbahn, so daß an einer Stelle derselben der an die Löcher 20 im Bereich der Saugkammer 17 anliegende Unterdruck unterbrochen ist. Die Scheibe 19 trennt den Saatgutbehälter 6 und die Saugkammer 17 voneinander.

Die Löcher 20 münden auf der Saatgutbehälterseite 21 der Scheibe 19 auf der Scheibenseitenfläche 22. Im Bereich der der Saugkammer 17 abgewandten Mündung 23 dieser Löcher ist auf der Scheibenseitenfläche 22 jeweils ein als Erhebung ausgebildeter Vorsprung 24 angeordnet, der sich jeweils auf der in Drehrichtung 25 der Scheibe 19 vorlaufend angeordneten Seite 26 des jeweiligen Loches 20 unmittelbar angrenzend an dasselbe befindet. Der Vorsprung 24 schirmt das jeweilige Loch 20 zumindest teilweise ab. Die Löcher 20 ragen radial nach außen über die Vorsprünge 24 hinaus. Sie sind als sich in radialer Richtung erstreckende Langlöcher von elliptischer Form ausgebildet. Etwa die Hälfte des jeweiligen Querschnittes jedes Loches 20 liegt innerhalb des Bereichs, der von dem um die Vereinzelungsorgansache 12 mit dem Radius des Abstandes zu den radial äußeren Flächen 27 der Vorsprünge 24 geschlagenen Kreis begrenzt ist.

Die Vorsprünge 24 sind auf ihrer in Drehrichtung 25 der Scheibe 19 vorlaufend angeordneten Seite 28 in Drehrichtung 25 gesehen in Richtung zur Scheibenebene schräg abfallend ausgebildet, so daß sie in die Scheibenseitenfläche auslaufen. Die in Drehrichtung 25 nachlaufend angeordnete Seite 29 jedes Vorsprunges 24 ist derart steil abfallend ausgebildet, daß sie normal zur Scheibenebene und radial zur Antriebswelle 12 verläuft. Somit verläuft auch die axial äußere Stufenkante 36 radial. Die Seite 29 ist vorzugsweise von rechteckiger oder quadratischer Form, kann jedoch auch jede andere geeignete Form aufweisen. Die der Antriebswelle 12 abgewandten radial äußeren Flächen 27 der Vorsprünge 24 verlaufen kreisbogenförmig. Die Vorsprünge 24 weisen auf ihrer steil abfallenden Seite 29 eine Höhe H auf, die dem halben mittleren Durchmesser der Saatkörner der auszubringenden Saatgutsorte entspricht. Die in Umfangsrichtung der Scheibe 19 gemessene Länge der

Vorsprünge 24 entspricht etwas mehr als dem halben Abstand zwischen jeweils zwei benachbarten Löchern 20.

Oberhalb der Antriebswelle 12 ist auf der Saatgutbehälterseite der Scheibe 19 an dem rückwärtigen Teil 13 des Gehäuses 4 ein bis an die Scheibe 19 heranreichendes Abstreifelement 32 angeordnet, welches bis an die der Antriebswelle 12 abgewandte ,radial äußere Seite 27 der Vorsprünge 24 heranreicht. Die in Drehrichtung 25 der Scheibe 19 nachlaufend angeordnete Seite 33 des Abstreifelementes 32 ist als Stufe 34 ausgebildet, wobei die radial innere Kante 35 dieser Stufe bis an die Vorsprünge 24 heranreicht. Die Fläche 33 verläuft normal zur Scheibenebene und radial zur Antriebswelle 12. Das Abstreifelement 32 ist einstückig mit dem Gehäuse ausgebildet.

Die Vorsprünge 24 laufen durch eine in dem rückwärtigen Teil 13 angebrachte Aussparung 37 in den zum Saatgutbehälter 6 gehörenden Saatgutvorratsraum 16 ein. Auf der Einlaufseite der Vorsprünge in diesen Vorratsraum 16 ist ein als Bürste 38 ausgebildetes Abweiselement angebracht, welches verhindert, daß Saatgut in diese Aussparung eindringt.

Die Funktion der vorbeschriebenen Einzelkornsämaschine ist wie folgt:

Das in dem Saatgutbehälter 6 befindliche Saatgut gelangt durch die Öffnung 15 in den Saatgutvorratsraum 16. Hier liegt das Saatgut der Vereinzelungsscheibe 19 an. Letztere wird von der Antriebswelle 12 in bekannter Weise angetrieben, so daß sich die Scheibe 19 während des Ausbringens des Saatgutes dreht. Während dieser Zeit sind die Löcher 20 im Bereich der Saugkammer 17 mit Saugluft beaufschlagt. Während sich die Löcher 20 und die Vorsprünge 24 aufgrund der Drehung der Scheibe 19 in Drehrichtung 25 durch den Saatgutvorrat bewegen, setzen sich jeweils ein oder maximal zwei Saatkörner 39 an den mit Saugluft beaufschlagten Löchern 20 an. Der erstere Fall ist durch den strichpunktierten Kreis a und der letztere Fall durch den strichpunktierten Kreis b in Fig. 7 dargestellt. Hierbei ist durch den jeweiligen Vorsprung sichergestellt, daß sich das zweite Saatkorn 39', falls überhaupt vorhanden, nicht in Drehrichtung, sondern in Radialrichtung ansetzt. Durch das Abstreifelement 32 wird sodann dieses zweite Saatkorn 39' von dem jeweiligen Loch 20 weggeschoben und fällt dann in Pfeilrichtung 40 wieder in den Saatgutvorratsraum 16 zurück. Die vereinzelten Saatkörner 39 fallen dann nach dem Unterbrechen der Saugwirkung an den Löchern aufgrund der Schwerkraft in bekannter Weise in die Säfurche.

Durch entsprechend geringe Größe der Löcher 20 in Radialrichtung kann jedoch das Ansetzen des zweiten Saatkornes verhindert werden. In diesem Falle ist jedoch nahezu immer bei Wechsel der Saatgutsorte ein Scheibenwechsel erforderlich. Dieser Scheibenwechsel kann sehr häufig durch etwas größere Ausbildung der Löcher 20 in Radialrichtung und Verwendung des Abstreifelementes 32 vermieden werden. Letzteres ist stufenförmig ausgebildet, um ein Einklemmen von Saatkörnern zwischen dem Abstreifelement 32 und den Vorsprüngen 24 zu verhindern. Das Abstreifelement 32 ist im Vergleich zum Stand der Technik von wesentlich geringerem konstruktiven Aufwand, da es einstückig mit dem Gehäuse verbunden und deshalb nicht verstellbar ausgebildet ist.

Die Vorsprünge 24 rühren gleichzeitig den Saatgutvorrat durch, so daß eine Brückenbildung des Saatgutes im Bereich der Scheibe 19 verhindert wird. Dadurch, daß die Vorsprünge auf der in Drehrichtung vorlaufend angeordneten Seite der Löcher angebracht sind, wird weiterhin zwangsläufig verhindert, daß die Vorsprünge 24 die Saatkörner 39 direkt zu den Löchern 20 schaufeln; d. h. die Vorsprünge 24 können die Saatkörner nicht mitnehmen. Hierdurch wird in vielfachen Fällen eine Doppelbelegung der Löcher 20 durch die Saatkörner 39 vermieden. Infolge der schrägen Fläche 28 der Vorsprünge 24 werden die Saatkörner 39 leicht angehoben bzw. weggedrückt, so daß sich auch dadurch eine Doppelbelegung verhindern läßt.

Es sei noch darauf hingewiesen, daß das Abstreifelement 32 auch bei den Vereinzelungsorganen eingesetzt werden kann, bei denen auf der Scheibenseitenfläche keine Vorsprünge im Bereich der Löcher angeordnet sind.

Das Ausführungsbeispiel gemäß den Fig. 9 und 10 unterscheidet sich von dem vorhergehenden lediglich durch die andere Ausbildung der Vorsprünge und des Abstreifelementes. Auf dem als Scheibe 41 ausgebildeten Vereinzelungsorgan sind die Vorsprünge 42 auf der in Drehrichtung 25 vorlaufend angeordneten Seite des jeweiligen Loches 20 angebracht. Die Vorsprünge 42 sind auf ihrer in Drehrichtung 25 der Scheibe 41 vorlaufend angeordneten Seite 43 in Drehrichtung 25 gesehen in Richtung zur Scheibenebene schräg abfallend ausgebildet, so daß diese Seite 43 in die Scheibenseitenfläche ausläuft. Auf ihrer in Drehrichtung 25 nachlaufend angeordneten Seite verlaufen die Vorsprünge 42 normal zur Scheibenebene und radial zur Scheibe, während die jeweilige, der Vereinzelungsorganachse zugewandte oder radial innere Seite 44 der Vorsprünge 42 von der steilen Hinterkante 45 tangential schräg nach außen in Richtung zu der in Drehrichtung 25 vorlaufend angeordneten Kante 46 verläuft.

Oberhalb der Antriebswelle 12 ist an dem rückwärtigen Teil 13 des Gehäuses 4 ein Abstreifelement 47 angeschraubt, welches bis an die Vorsprünge 42 heranreicht. Die in Drehrichtung 25 der Scheibe 41 nachlaufend angeordnete Seite des Abstreifelementes 47 ist als steil abfallende Stufe 48 ausgebildet, wobei die radial innengelegene Kante 49 dieser Stufe 48 bis an die Vorsprünge 42 heranreicht. Die Stufe 48 verläuft normal zur Scheibenebene und unter

einem Winkel $\alpha$ , der etwa 20 Grad beträgt, abweichend von der Radialen 51. Somit verläuft auch die axial äußere Stufenkante 50 unter diesem Winkel $\alpha$ .

Durch die zusätzliche seitliche Schräge der einzelnen Vorsprünge 42 wird ein weicherer Durchlauf der Vorsprünge 42 durch den Saatgutvorrat erreicht. Die Saatkörner dieses Saatgutvorrates werden zwar gut durchgerührt, aber nicht sehr weit abgehoben, so daß sie sich sehr gut vereinzelt an die Löcher ansetzen können.

Das Vereinzelungsorgan gemäß den Fig. 11 und 12 ist ebenfalls als Scheibe 52 ausgebildet, bei der die Löcher 20 nahe an der Außenkante 53 der Scheibenfläche 54 angeordnet sind. Die Scheibe 52 weist auf der der Vereinzelungsorganachse abgewandten Seite 55 der Löcher 20 auf der dem Saatgutbehälter 6 zugewandten Seite der Scheibe 52 einen stufenförmigen Ringabsatz 56 auf, der in einen Ring 57 mit einer im Vergleich zur Scheibe 52 axial geringeren Dicke übergeht. Dieser Ring 57 gewährleistet eine gute Abdichtung zur Saugkammer 17. Durch die Anordnung der Löcher 20 an der Außenkante 53 der Scheibenfläche 54 bzw. in der Nähe des Ringabsatzes 56 wird ein störungsfreies Abfallen der vereinzelten Saatkörner von den Löchern 20 nach dem Unterbrechen des an den Löchern anliegenden Saugluftstromes erreicht. Weiterhin wird eine verbesserte Vereinzelung der Saatkörner erreicht, weil sich überzählige Saatkörner nicht im Bereich des Ringabsatzes 56 an den mit Saugluft beaufschlagten Löchern 20 mangels Platz anlagern können.

Das Vereinzelungsorgan gemäß den Fig. 13 und 14 ist ebenfalls als Scheibe 58 ausgebildet. In dem Bereich der Löcher 20 ist bei dieser Scheibe 58 auf ihrer dem Saatgutbehälter 6 zugewandten Seite auf der Scheibenfläche 59 ein in Form einer Erhebung ausgebildeter Ring 60 angebracht, wobei die Löcher 20 in der ebenen Oberfläche 61 dieses Ringes 60 münden. Somit weist die Scheibe 58 sowohl auf ihrer der Vereinzelungsorganachse abgewandten, d. h. radial äußeren, als auch der zugewandten, d. h. radial inneren Seite jeweils den von dem Ring 60 gebildeten Ringabsatz 62 auf. Die in radialer Richtung gemessene Breite B des Ringes 60 ist größer als der Durchmesser D der Löcher 20. Die Vorsprünge 63 sind auf dem Ring 60 angeordnet, wobei letzterer breiter als die ersteren sind. Die Breite des Ringes entspricht etwa dem mittleren Durchmesser des jeweils auszubringenden Saatgutes. Durch den Ring 60 wird eine sehr gute Vereinzelung der Saatkörner erreicht, da sich diese praktisch nur direkt vor den Löchern 20 anlagern können. Das Abstreifelement 64 ist an seiner in Drehrichtung 25 der Scheibe nachlaufend angeordneten Seite mit einer Bürste 65 versehen.

Das als Scheibe 66 ausgebildete Vereinzelungsorgan gemäß den Fig. 15 und 16 weist die Löcher 20 auf, in deren Bereich auf der dem Saatgutbehälter zugewandten Seite rechteckförmige Erhebungen 67 auf einer Kreisbahn angebracht sind, wobei die Löcher 20 in der Oberfläche dieser Erhebungen 67 münden. Auf den Erhebungen 67 sind die Vorsprünge 68 angeordnet, welche auf der in Drehrichtung 25 der Scheibe vorlaufend angeordneten Seite der Löcher angebracht sind. Bei der in den Fig. 15 und 16 dargestellten Anordnung von Erhebungen 67 bleibt im Bereich der Löcher 20 nur eine derart kleine Auflagefläche 69 für die Saatkörner 39, daß sich lediglich ein einziges Saatkorn an jeweiligem Loch 20 anlagern kann.

Bei dem in Fig. 17 dargestellten Vereinzelungsorgan in Form einer Scheibe 19 ist das Abstreifelement 70 als Luftstrahl 71 ausgebildet. Die Scheibe 19 entspricht der Ausführung nach Fig. 4. Oberhalb der Vereinzelungsorganachse, die von der Antriebswelle 12 gebildet wird, ist die Düse 72 angebracht, aus der der

Luftstrahl 71 austritt. Letzterer ist so gerichtet, daß nur ein Saatkorn 39 im Windschatten 73 des jeweiligen Vorsprunges 24 liegt, wenn dieser sich an der Düse 72 bzw. dem Luftstrahl 71 vorbeibewegt. Hierdurch wird eine einfache Vereinzelung der Saatkörner 39 erreicht, falls jeweils mehr als ein Saatkorn an dem jeweiligen Loch 20 anhaftet.

Die Einzelkornsämaschine gemäß den Fig. 18 und 19 unterscheidet sich von den vorherigen Ausführungsbeispielen durch die Anordnung der Vorsprünge 80 auf der Mantelfläche 78 des in Form einer Platte 75 scheibenförmig ausgebildeten Vereinzelungsorgans 74. Die Mündungen 79 der Löcher 76 befinden sich ebenfalls auf der Mantelfläche 78 der Platte 75. Die Vorsprünge 80 sind jeweils auf der in Drehrichtung 81 der Platte 75 vorlaufend angeordneten Seite 82 der Löcher 76 in unmittelbarer Nähe derselben angeordnet, wobei die Vorsprünge das jeweilige Loch 76 zumindest zur Hälfte abschirmen.

Die Vorsprünge 80 sind auf ihrer in Drehrichtung 81 der Scheibe 75 vorlaufend angeordneten Seite 83 in Drehrichtung 81 gesehen schräg zur Mantelfläche 78 hin bis zum Auslaufen in dieselbe abfallend ausgebildet. Auf der in Drehrichtung 81 nachlaufend angeordneten Seite 84 sind die Vorsprünge 80 normal zur Scheibenebene und in radialer Richtung der Scheibe 75 verlaufend ausgebildet. Die radial äußere Oberkante 85 der steilen Rückseite 86 verläuft parallel zur Scheibendrehachse. Die Rückseite 86 des Vorsprungs weist eine Höhe auf, die dem halben mittleren Durchmesser der Saatkörner der auszubringenden Saatgutsorte entspricht.

Oberhalb der Scheibendrehachse ist an dem Gehäuse 87 der Einzelkornsämaschine ein bis an die Vorsprünge 80 heranreichendes Abstreifelement 88 angeordnet, welches auf der in Drehrichtung 81 nachlaufend angeordneten Seite eine steil abfallende Stufe 89 aufweist, die bis an die Vorsprünge 80 heranreicht. Das Abstreifelement kann auch in Form des Element 88' an der mit strichpunktierten Linien angedeuteten Stelle an dem Gehäuse 87 angeordnet sein. Diese Anordnung hat den Vorteil, daß die abgestreiften Saatkörner ungehindert in den Saatgutbehälter zurückfallen können.

Die Funktions- und Wirkungsweise des Vereinzelungsorgans 74 ist ähnlich der des Vereinzelungsmechanismus 5 gemäß den Figuren 2 bis 8. Während des Ausbringvorganges dreht sich die Platte 75 durch den Saatgutvorrat und die mit Saugluft beaufschlagten Löcher 76 saugen die Saatkörner an, so daß sich jeweils ein oder in selteneren Fällen mehrere Saatkörner an die Mündungen 79 der Löcher 76 ansetzen. Im letzteren Falle werden alle Saatkörner bis auf jeweils eines von dem Abstreifelement 88 abgestreift. Nachdem der an die Löcher 76 anliegende Saugluftstrom unterbrochen worden ist, können die vereinzelten Saatkörner ungehindert aufgrund der Schwer- und Fliehkraft in die Saatfurche fallen.

In dem senkrecht stehenden Gehäuse 90 der Einzelkornsämaschine gemäß den Fig. 20 bis 22 ist ein umlaufendes scheibenförmiges Vereinzelungsorgan 11 auf einer horizontalen Antriebswelle 12 angeordnet, die in bekannter Weise angetrieben ist.

Das Gehäuse 90 besteht aus einem der Einfachheit halber auch im folgenden als rückwärtig bezeichneten Teil 13 und einem Deckel 14. Der Saatgutbehälter 6 ist an dem Teil 13 angeflanscht. Der Teil 13 des Gehäuses 4 weist eine Öffnung 15 zum angeflanschten Saatgutbehälter 6 auf, so daß sich der im rückwärtigen Teil 13 des Gehäuses 4 befindliche Saatgutvorratsraum 16 mit dem Saatgutbehälter 6 eine Einheit bildet. Im Deckel 14 ist eine in der Form einer Saugniere ausgebildete Saugkammer 17 angeordnet, die über einen Kanal 18 und einen Schlauch 10 mit der Saugluftseite des Gebläses 9 verbunden ist.

Das Vereinzelungsorgan 11 ist als Scheibe 19 ausgebildet, die konzentrisch zu der von der Antriebswelle 12 gebildeten Vereinzelungsorganachse im gleichen Umfangsabstand zueinander angeordnete Löcher 20 aufweist, von denen der Übersichtlichkeit halber nur einige dargestellt sind. Die Saugkammer 17 erstreckt sich längs eines Teils der Lochbahn, so daß an der Stelle 91 derselben der an die Löcher 20 im Bereich der Saugkammer 17 anliegende Unterdruck unterbrochen ist. Die Scheibe 19 trennt die Saatgutbehälter 6 und die Saugkammer 17 voneinander.

Die Löcher 20 münden auf der Saatgutbehälterseite 21 der Scheibe 19 auf der Scheibenseitenfläche 22. Im Bereich der der Saugkammer 17 abgewandten Mündung 23 dieser Löcher ist auf der Scheibenseitenfläche 22 jeweils ein als Erhebung ausgebildeter Vorsprung 24 angeordnet, der sich jeweils auf der in Drehrichtung 25 der Scheibe 19 vorlaufend angeordneten Seite 26 des jeweiligen Loches 20 unmittelbar an dasselbe angrenzend befindet. Der Übersichtlichkeit halber sind nur einige der Vorsprünge eingezeichnet. Der Vorsprung 24 schirmt das jeweilige Loch 20 zumindest teilweise ab. Die Löcher 20 ragen radial nach außen über die Vorsprünge 24 hinaus. Sie sind als sich in radialer Richtung erstreckende Langlöcher von elliptischer Form ausgebildet. Etwa die Hälfte des jeweiligen Querschnittes jedes Loches 20 liegt innerhalb des Bereichs, der von dem um die Vereinzelungsorganachse 12 mit dem Radius des Abstandes zu den radial äußeren Flächen 27 der Vorsprünge 24 geschlagenen Kreis begrenzt ist. Die Vorsprünge 24 laufen durch eine im rückwärtigen Teil 13 angebrachte Aussparung 37 in den zum Saatgutbehälter 6 gehörenden Saatgutvorratsraum 16 ein. Auf der Einlaufseite der Vorsprünge in diesen Vorratsraum 16 ist ein als Bürste 38 ausgebildetes Abweiselement angebracht, welches verhindert, daß Saatgut in diese Aussparung eindringt.

Oberhalb der Antriebswelle 12 ist auf der Saatgutbehälterseite der Scheibe 19 an dem rückwärtigen Teil 13 des Gehäuses 90 ein Abstreifelement 32 angeordnet, welches bis an die der Antriebswelle 12 abgewandten radial äußeren Seiten 29 der Vorsprünge 24 heranreicht. Die in Drehrichtung 25 der Scheibe 19 nachlaufend angeordnete Seite 33 des Abstreifelementes 32 ist als Stufe 34 ausgebildet, wobei die radial innere Kante 35 der Stufe bis an die Vorsprünge 24 heranreicht. Die Fläche 33 verläuft normal zur Scheibenebene und radial zur Antriebswelle 12. Das Abstreifelement 32 ist einstückig mit dem Gehäuse 90 ausgebildet.

An das Abstreifelement 32 schließt sich ohne Übergang ein Verlängerungsstück 92 an, das sich entlang der Umlaufbahn 93 der Vorsprünge 24 erstreckt und an der Stelle 94 endet, an der das vereinzelte Saatkorn das Vereinzelungsorgan 19 verläßt und in die Saatfurche fällt. Auf der dem Abstreifelement 32 abgewandten radial inneren Seite 95 der Vorsprünge 24 ist entlang der Umlaufbahn 96 der Vorsprünge 24 und gegenüberliegend dem Verlängerungsstück 92 des Abstreifelementes 32 ein Führungsstück 97 angeordnet, welches ebenfalls an der Stelle 94 endet. Für einzelne Saatgutsorten, die nicht sehr gut geführt werden können, kann es sinnvoll sein, das Führungsstück 97 über die Stelle 94 hinausragen zu lassen. Auch ist es für gut zu führende Saatgutsorten denkbar, daß das Führungsstück 97 vor der Stelle 94 endet. Der Anfang 98 des Führungsstückes 97 ist in Drehrichtung 25 vorlaufend gegenüber der Stufe 34 des Abstreifelementes 32 mit einem Abstand A angeordnet, der zumindest dem Abstand B zwischen zwei benachbarten Löchern 20 bzw. Vorsprüngen 24 entspricht.

Das Verlängerungsstück 92 und das Führungsstück 97 bilden zusammen den Führungskanal 99, der eine Breite und eine Tiefe aufweist, die jeweils auf die Abmessungen der Saatkörner der auszubringenden Saatgutsorte abgestimmt sind. Es sind verschiedene Vereinzelungsorgane 19 mit unterschiedlichen Vorsprüngen vorgesehen, die ebenfalls auf die auszubringende Saatgutsorte abgestimmt sind. Des weiteren sind Einsätze für den Führungskanal 99 vorgesehen, damit die vereinzelten Saatkörner in dem Führungskanal sicher geführt werden können.

Der an den Löchern 20 anliegende Unterdruck ist an der Stelle 91 im Bereich des Führungskanals 99 unterbrochen. Diese Stelle 91 ist in Drehrichtung 25 mit einem erheblichen Abstand C nachlaufend gegenüber den Enden 100 des Verlängerungsstücks 92 bzw. des Führungsstücks 97 angeordnet. Weiterhin ist diese Stelle 91 in Drehrichtung 25 in einem Abstand D vorlaufend gegenüber der Vorderkante 101 des Führungsstückes 97 angeordnet. Dieser Abstand D ist größer als der Abstand B zwischen zwei benachbarten Vorsprüngen 24.

Die Funktionsweise der Einzelkornsämaschine gemäß den Fig. 20 bis 22 ist wie folgt: Das in dem Saatgutbehälter 6 befindliche Saatgut gelangt durch die Öffnung 15 in den Saatgutvorratsraum 16. Hier liegt das Saatgut der Vereinzelungsscheibe 19 an. Letztere wird von der Antriebswelle 12 in bekannter Weise angetrieben, so daß sich die Scheibe 19 während des Ausbringens des Saatgutes dreht.

-24-

0152100

Während dieser Zeit sind die Löcher 20 im Bereich der in Form einer Saugniere ausgebildeten Saugkammer 17 mit Saugluft beaufschlagt. Während sich die Löcher 20 und die Vorsprünge 24 aufgrund der Drehung der Scheibe 19 in Drehrichtung 25 durch den Saatgutvorrat bewegen, setzen sich jeweils ein oder maximal zwei Saatkörner 102 an den mit Saugluft beaufschlagten Löchern 20 an. Hierbei ist durch den jeweiligen Vorsprung 24 und den kleinen Durchmesser der Löcher 20 sichergestellt, daß sich das zweite Saatkorn, falls überhaupt vorhanden, nicht in Drehrichtung, sondern in Radialrichtung der Scheibe ansetzt. Durch das Abstreifelement 32 wird sodann dieses zweite Saatkorn von dem jeweiligen Loch weggeschoben und fällt dann wieder in den Saatgutvorratsraum zurück. Durch entsprechend geringe Größe der Löcher 20 in Radialrichtung kann jedoch das Ansetzen des zweiten Saatkornes verhindert werden.

Die Vorsprünge 24 rühren gleichzeitig den Saatgutvorrat durch, so daß eine Brückenbildung des Saatgutes im Bereich der Scheibe 19 verhindert wird. Dadurch, daß die Vorsprünge auf der in Drehrichtung vorlaufend angeordneten Seite der Löcher angebracht sind, wird weiterhin zwangsläufig verhindert, daß die Vorsprünge 24 die Saatkörner 39 direkt zu den Löchern 20 schaufeln; d. h. die Vorsprünge 24 können die Saatkörner 102 nicht mitnehmen. Hierdurch wird in vielfachen Fällen eine Doppelbelegung der Löcher 20 durch die Saatkörner 102 vermieden. Infolge der schrägen Fläche der Vorsprünge 24 werden diese Saatkörner 102 leicht angehoben bzw. weggedrückt, so daß sich auch dadurch eine Doppelbelegung verhindern läßt.

Bei fortlaufender Drehung der Scheibe 19 in Drehrichtung 25 gelangt das an jedem mit Unterdruck beaufschlagten Loch 20 anhaftende und vereinzelte Saatkorn 102 in den Führungskanal 99. In diesem befinden sich die Saatkörner 102 jeweils in einem eigenen, von den Vorsprüngen 24 abgegrenzten Raum. An der Stelle 91 wird der an den Löchern 20 anliegende Unterdruck unterbrochen und die Saatkörner 102 können sich bereits an dieser Stelle von dem jeweiligen Loch 20 lösen. Auch festgeklemmte Saatkörner 102 können sich bis zur Abwurfstelle 94 aus den Löchern 20 lösen. Die von den Löchern 20 gelösten Saatkörner 102 werden von den Vorsprüngen 24 im Führungskanal 99 sicher bis zur Stelle 94 geführt. Alle Saatkörner 102 werden an der Stelle 94 mit gleicher Geschwindigkeit und in die gleiche Richtung in die Säfurche abgeworfen, so daß eine gleichmäßige Ablage der Saatkörner 102 erreicht wird.

GRUNECKER KINKELDEY STOCKMAIR & PARTNER    PATENTANWALTE
0152100

P000 MUNCHEN 22

EP 2186-106/er

12.2.1985

Amazonen-Werke

H. Dreyer GmbH & Co. KG

4507 Hasbergen-Gaste

## Pneumatische Einzelkornsämaschine

## Patentansprüche

1. Pneumatische Einzelkornsämaschine mit einem Saatgutbehälter und einer Saugkammer, die voneinander durch ein
umlaufendes scheibenförmiges Vereinzelungsorgan getrennt
sind, welches mit Vorsprüngen, die in Umfangsrichtung des
Vereinzelungsorgans mit gegenseitigen Abständen angeordnet
sind, durch den im Saatgutbehälter vorhandenen Saatgutvorrat geführt ist, wobei jeder Vorsprung im Bereich der von
der Saugkammer entfernten Mündung jeweils eines durch das
Vereinzelungsorgan hindurch verlaufenden und mit der Saugkammer in Verbindung stehenden Loches angeordnet ist, wobei ferner
die Saugkammer sich längs eines Teils der Bahn der Löcher erstreckt und der Unterdruck an einer Stelle der Bahn unterbrochen ist, dadurch  g e k e n n z e i c h n e t ,  daß

jeder Vorsprung (24, 42, 63, 68, 80) auf der in Drehrichtung (25, 81) des Vereinzelungsorgans (19, 41, 52, 58, 66, 75) vorlaufend angeordneten Seite des jeweiligen Loches (20, 76) angeordnet ist, so daß er das jeweilige Loch (20, 76) zumindest teilweise abschirmt.

2. Einzelkornsämaschine nach Anspruch 1, dadurch g e - k e n n z e i c h n e t , daß die Vorsprünge (80) und die von der Saugkammer entfernten Mündungen (79) der Löcher (76) auf der Mantelfläche (78) des Vereinzelungsorgans (75) angeordnet sind.

3. Einzelkornsämaschine nach Anspruch 1, dadurch g e - k e n n z e i c h n e t , daß die Vorsprünge (24, 42, 63, 68) und die von der Saugkammer (17) entfernten Mündungen (23) der Löcher (20) auf der dem Saatgutbehälter (6) zugewandten Seitenfläche (22, 54, 59) des Vereinzelungsorgans (19, 41, 52, 58, 66) angeordnet sind.

4. Einzelkornsämaschine nach wenigstens einem der Ansprüche 1 bis 3, dadurch g e k e n n z e i c h n e t , daß die Abmessungen der Vorsprünge (24, 42, 63, 68, 80) in Umfangsrichtung des Vereinzelungsorgans (19, 41, 52, 58, 75) wenigstens dem halben Abstand zwischen jeweils zwei benachbarten Löchern (20, 76) entsprechen.

5. Einzelkornsämaschine nach wenigstens einem der Ansprüche 1 bis 4, dadurch g e k e n n z e i c h n e t , daß die Vorsprünge (24, 42, 63, 68, 80) unmittelbar an die jeweiligen Löcher (20, 76) angrenzend angeordnet sind.

6. Einzelkornsämaschine nach wenigstens einem der Ansprüche 1 bis 5, dadurch g e k e n n z e i c h n e t , daß die Vorsprünge (24, 42, 63, 68, 80) auf der in Drehrichtung (25, 81) des Vereinzelungsorgans (19, 41, 52, 58, 75) vorlaufend angeordneten Seite bei Betrachtung in Drehrichtung schräg in Richtung zur Mantelfläche bzw. zur Ebene des Vereinzelungsorgans abfallend und auf der in Drehrichtung (25, 81) des Vereinzelungsorgans (19, 41, 52, 58, 75) nachlaufend angeordneten Seite steil in Richtung zur Mantelfläche bzw. zur Ebene des Vereinzelungsorgans abfallend ausgebildet sind.

7. Einzelkornsämaschine nach Anspruch 6, dadurch g e - k e n n z e i c h n e t , daß die Vorsprünge (24, 42, 68, 80) auf ihrer in Drehrichtung (25, 81) des Vereinzelungsorgans (19, 41, 66, 75) vorlaufend angeordneten Seite in die Mantelfläche (78) bzw. in die Scheibenseitenfläche (22) zumindest annähernd auslaufen.

8. Einzelkornsämaschine nach wenigstens einem der Ansprüche 1 bis 7, dadurch g e k e n n z e i c h n e t , daß die der Vereinzelungsorganachse zugewandten, radial inneren Seitenflächen (44) der Vorsprünge (42) zumindest annähernd von der steilen Hinterkante (45) tangential schräg nach außen in Richtung zu der in Drehrichtung (25) vorlaufend angeordneten Vorderkante (46) verlaufen.

9. Einzelkornsämaschine nach wenigstens einem der Ansprüche 1 bis 8, dadurch g e k e n n z e i c h n e t , daß die Vorsprünge (24, 42, 63, 68, 80) auf ihrer in Drehrichtung (25, 81) des Vereinzelungsorgans (19, 41, 52, 58, 66, 75) nachlaufend angeordneten Seite zumindest annähernd radial verlaufend ausgebildet sind.

10. Einzelkornsämaschine nach wenigstens einem der Ansprüche 1 bis 9, dadurch g e k e n n z e i c h - n e t , daß die Vorsprünge (24, 42, 63, 68, 80) auf ihrer in Drehrichtung (25, 81) des Vereinzelungsorgans (19, 41, 52, 58, 66, 75) nachlaufend angeordneten Seite im wesentlichen normal zur Ebene des Vereinzelungsorgans (19, 41, 52, 58, 75) verlaufen.

11. Einzelkornsämaschine nach wenigstens einem der Ansprüche 1 bis 10, dadurch  g e k e n n z e i c h - n e t , daß die Vorsprünge (24) auf ihrer der Vereinzelungsorganachse (12) abgewandten radial äußeren Seite (27) zumindest annähernd kreisbogenförmig verlaufen.

12. Einzelkornsämaschine nach wenigstens einem der Ansprüche 1 bis 11, dadurch  g e k e n n z e i c h - n e t , daß die radial äußere Oberkante (85) der in Drehrichtung nachlaufend angeordneten steilen Seite (86) der Vorsprünge (24) zumindest annähernd parallel zur Scheibendrehachse (12) verläuft.

13. Einzelkornsämaschine nach wenigstens einem der Ansprüche 1 bis 12, dadurch  g e k e n n z e i c h - n e t , daß die axial äußere Oberkante (30) der in Drehrichtung nachlaufend angeordneten steilen Seite (29) der Vorsprünge (24) zumindest annähernd parallel zur Ebene des Vereinzelungsorgans (19) verläuft.

14. Einzelkornsämaschine nach wenigstens einem der Ansprüche 1 bis 13, dadurch  g e k e n n z e i c h - n e t , daß die Vorsprünge (24) auf ihrer in Drehrichtung (25) nachlaufend angeordneten steilen Seite (29) etwa die Höhe (H) aufweisen, die dem halben mittleren Durchmesser der Saatkörner der auszubringenden Saatgutsorte entspricht.

15. Einzelkornsämaschine nach wenigstens einem der Ansprüche 1 bis 14, dadurch  g e k e n n z e i c h - n e t , daß die Löcher (20) radial nach außen über die Vorsprünge (24, 42, 63, 68) hinausragen.

16. Einzelkornsämaschine nach wenigstens einem der Ansprüche 1 bis 15, dadurch g e k e n n z e i c h n e t , daß die Löcher (20) als sich in radialer Richtung erstreckende Langlöcher ausgebildet sind.

17. Einzelkornsämaschine nach Anspruch 16, dadurch g e k e n n z e i c h n e t , daß die Löcher (20) eine elliptische Form aufweisen.

18. Einzelkornsämaschine nach wenigstens einem der Ansprüche 1 bis 17, dadurch g e k e n n z e i c h n e t , daß etwa die Hälfte des Querschnittes jedes Loches (20) innerhalb des Bereichs liegt, der von dem um die Vereinzelungsorganachse (12) mit dem Radius des Abstandes zu den radial äußeren Flächen (27) der Vorsprünge (24, 42, 63, 68) geschlagenen Kreis begrenzt ist.

19. Einzelkornsämaschine nach wenigstens einem der Ansprüche 1 bis 18 mit einem auf der Saatgutbehälterseite im Bereich der Saugkammer an dem Gehäuse der Einzelkornsämaschine angeordneten, an das Vereinzelungsorgan heranreichenden Abstreifelement, dadurch g e k e n n z e i c h n e t , daß das Abstreifelement (32, 47, 64, 65, 70, 88) bis an die Vorsprünge (24, 42, 63, 68, 80) zumindest annähernd heranreicht.

20. Einzelkornsämaschine nach Anspruch 19, dadurch g e k e n n z e i c h n e t , daß das Abstreifelement (32, 47, 64, 70, 88) an die der Vereinzelungsorganachse (12) abgewandten radial äußeren Seite (27) der Vorsprünge (24, 42, 63, 68, 80) zumindest annähernd heranreicht.

21. Einzelkornsämaschine nach Anspruch 19 oder 20, dadurch g e k e n n z e i c h n e t , daß die in Drehrichtung (25, 81) des Vereinzelungsorgans (19, 41, 52, 58, 75) nachlaufend angeordnete Seite (33) des Abstreifelements (32, 47,

0152100

64, 65, 88) als abfallende Stufe (34, 48, 89) ausgebildet ist, und daß die radial innere Kante (35, 49) der Stufe (34, 48, 89) zumindest annähernd bis an die Vorsprünge (24, 42, 63, 68, 80) heranreicht.

22. Einzelkornsämaschine nach Anspruch 21, dadurch g e k e n n z e i c h n e t , daß die axial äußere Stufenkante (36, 50) zumindest annähernd radial verläuft.

23. Einzelkornsämaschine nach Anspruch 22, dadurch g e k e n n z e i c h n e t , daß die axial äußere Stufenkante (36) radial verläuft.

24. Einzelkornsämaschine nach Anspruch 22, dadurch g e k e n n z e i c h n e t , daß die axial äußere Stufenkante (50) in einem Bereich von 20° bis 40° von der Radialen (51) abweichend verläuft.

25. Einzelkornsämaschine nach wenigstens einem der Ansprüche 19 bis 24, dadurch g e k e n n z e i c h - n e t , daß die radial innere Kante (35, 49) und/oder die axial äußere Kante (36, 50) der Stufe (34, 48, 89) abgerundet ist.

26. Einzelkornsämaschine nach wenigstens einem der Ansprüche 19 bis 25, dadurch g e k e n n z e i c h - n e t , daß das Abstreifelement (32, 47, 64, 65, 88) fest an dem Gehäuse (4, 13, 90) angeordnet ist.

27. Einzelkornsämaschine nach Anspruch 26, dadurch g e k e n n z e i c h n e t , daß das Abstreifelement (32, 64, 65, 88) einstückig mit dem Gehäuse (13, 90) ausgebildet ist.

28. Einzelkornsämaschine nach Anspruch 26, dadurch g e k e n n z e i c h n e t , daß das Abstreifelement (47) an dem Gehäuse (13) angeschraubt ist.

29. Einzelkornsämaschine nach wenigstens einem der Ansprüche 1, 3 bis 28, dadurch g e k e n n z e i c h - n e t , daß die Löcher (20) nahe an der Außenkante (53) des Vereinzelungsorgans (52) angeordnet sind.

30. Einzelkornsämaschine nach wenigstens einem der Ansprüche 1, 3 bis 29, dadurch g e k e n n z e i c h - n e t , daß die Vorsprünge (24, 63, 68) nahe an der Außenkante (53, 56, 62) des Vereinzelungsorgans (52, 58) angeordnet sind.

31. Einzelkornsämaschine nach wenigstens einem der Ansprüche 1 bis 30, dadurch g e k e n n z e i c h - n e t , daß auf der dem Saatgutbehälter (6) zugewandten Seite des Vereinzelungsorgans (52) ein stufenförmig abfallender Ringabsatz (56) auf der der Vereinzelungsorganachse (12) abgewandten, radial äußeren Seite der Löcher (20) ausgebildet ist.

32. Einzelkornsämaschine nach wenigstens einem der Ansprüche 1 bis 31, dadurch g e k e n n z e i c h - n e t , daß auf der dem Saatgutbehälter (6) zugewandten Seite des Vereinzelungsorgans (58) ein stufenförmig abfallender Ringabsatz (62) auf der der Vereinzelungsorganachse (12) zugewandten radial inneren Seite der Löcher (20) ausgebildet ist.

33. Einzelkornsämaschine nach wenigstens einem der Ansprüche 1 bis 32, dadurch g e k e n n z e i c h - n e t , daß in dem Bereich der Löcher (20) auf der dem Saatgutbehälter (6) zugewandten Seite des Vereinzelungsorgans (58) ein in Form einer Erhebung ausgebildeter umlaufender Ring (60) angebracht ist, und daß in der ebenen Fläche (61) dieses Ringes (60) die Löcher (20) münden.

34. Einzelkornsämaschine nach Anspruch 33, dadurch g e k e n n z e i c h n e t , daß die Breite (B) dieses Rings (60) in radialer Richtung größer als der Durchmesser (D) der Löcher (20) ist.

35. Einzelkornsämaschine nach Anspruch 33 oder 34, dadurch g e k e n n z e i c h n e t , daß die Vorsprünge (63) auf dem Ring (60) angeordnet sind.

36. Einzelkornsämaschine nach Anspruch 34 oder 35, dadurch g e k e n n z e i c h n e t , daß der Ring (60) eine Breite (B) aufweist, die etwa dem mittleren Durchmesser des jeweils auszubringenden Saatgutes entspricht.

37. Einzelkornsämaschine nach wenigstens einem der Ansprüche 1 bis 36, dadurch g e k e n n z e i c h - n e t , daß die Vorsprünge (24, 42, 63, 68, 80) eine Breite aufweisen, die etwa dem mittleren Durchmesser des jeweils auszubringenden Saatgutes entspricht.

38. Einzelkornsämaschine nach wenigstens einem der Ansprüche 33 bis 37, dadurch g e k e n n z e i c h - n e t , daß der Ring (60) eine größere Breite (B) als die Vorsprünge (63) aufweist.

39. Einzelkornsämaschine nach wenigstens einem der Ansprüche 19 bis 38, dadurch g e k e n n z e i c h - n e t , daß das Abstreifelement (64) als Bürste (65) ausgebildet ist.

40. Einzelkornsämaschine nach wenigstens einem der Ansprüche 19, 20, 29 bis 38, dadurch g e k e n n - z e i c h n e t , daß das Abstreifelement (70) als Luftstrahl (71) ausgebildet ist.

41. Einzelkornsämaschine nach Anspruch 40, dadurch g e k e n n z e i c h n e t , daß der Luftstrahl (71) so gerichtet ist, daß nur ein Saatkorn (39) im Windschatten (73) des Vorsprunges (24) liegt, wenn der Vorsprung (24) sich an den Luftstrahl (71) vorbeibewegt.

42. Einzelkornsämaschine nach wenigstens einem der Ansprüche 1 bis 39, dadurch g e k e n n z e i c h - n e t , daß sich an das Abstreifelement (32) in Drehrichtung (25) des Vereinzelungsorgans (11) entlang der Umlaufbahn (93) der Vorsprünge (24) ein Verlängerungsstück (92) anschließt, daß ferner auf der dem Abstreifelement (32) abgewandten Seite (95) der Vorsprünge (24) entlang der Umlaufbahn der Vorsprünge (24) und gegenüberliegend dem Verlängerungsstück (92) des Abstreifelements (32) ein Führungsstück (97) angeordnet ist, und daß das Verlängerungsstück (92) und das Führungsstück (97) zumindest bis zu der Stelle (94) reichen, an der das vereinzelte Saatgut (102) das Vereinzelungsorgan (19) verläßt.

43. Einzelkornsämaschine nach Anspruch 42, dadurch g e k e n n z e i c h n e t , daß der Anfang (98) des Führungsstücks (97) in Drehrichtung vorlaufend gegenüber der Stufe (34) des Abstreifelements (32) mit einem Abstand (A) angeordnet ist, der zumindest dem Abstand (B) zwischen zwei benachbarten Löchern (20) bzw. Vorsprüngen (24) entspricht.

44. Einzelkornsämaschine nach Anspruch 42 oder 43, dadurch g e k e n n z e i c h n e t , daß der

Unterdruck in dem Bereich des Verlängerungsstücks (92)
und des Führungsstücks (97) unterbrochen ist.

45. Einzelkornsämaschine nach Anspruch 44, dadurch
g e k e n n z e i c h n e t , daß der Unterdruck
an einer Stelle unterbrochen ist, die in Drehrichtung
(25) des Vereinzelungsorgans (19) mit einem erheblichen
Abstand (C) nachlaufend gegenüber den Enden (100) des
Verlängerungsstücks (92) und des Führungsstücke (97)
angeordnet ist.

46. Einzelkornsämaschine nach Anspruch 44 oder 45,
dadurch g e k e n n z e i c h n e t , daß der
Unterdruck an einer Stelle (91) unterbrochen ist, die
in Drehrichtung (25) des Vereinzelungsorgans (11) zumindest in einem Abstand (D), der dem Abstand (B)
zwischen zwei benachbarten Vorsprüngen (24) entspricht,
vorlaufend gegenüber der Vorderkante (101) des Führungsstücks (97) angeordnet ist.

47. Einzelkornsämaschine nach wenigstens einem der
Ansprüche 42 bis 46, dadurch g e k e n n z e i c h -
n e t , daß Einsätze für den von dem Verlängerungsstück (92) und dem Führungsstück (97) gebildeten Führungskanal (99) vorgesehen sind.

FIG. 1

FIG.2

0152100

FIG. 3

FIG. 4

FIG.5

FIG.6

FIG. 7

FIG. 8

FIG. 10

FIG. 9

5 / 8

0152100

FIG. 11

FIG. 12

FIG. 14

FIG. 13

FIG. 15

FIG. 16

0152100

FIG. 18

FIG. 17

FIG. 19

FIG. 20

0152100

FIG. 21

FIG. 22